# EUROPÄISCHE PATENTSCHRIFT

(11) **EP 3 949 083 B1**
(45) Veröffentlichungstag und Bekanntmachung des Hinweises auf die Patenterteilung: **22.03.2023**
(21) Anmeldenummer: 20718251.0
(22) Anmeldetag: 03.04.2020
(51) Int. Cl.: H02K 1/24, H02K 19/10, H02K 29/03

(54) **VIERPOLIGER SYNCHRON-RELUKTANZMOTOR**
QUADRUPOLE SYNCHRONOUS RELUCTANCE MACHINE
MOTEUR À RÉLUCTANCE SYNCHRONE QUADRIPOLAIRE

(30) Priorität: 22.05.2019 EP 19175978
(43) Veröffentlichungstag der Anmeldung: 09.02.2022
(73) Patentinhaber: Siemens Aktiengesellschaft, 80333 München (DE)
(72) Erfinder: SCHMIDT, Johannes, 97218 Gerbrunn (DE); BACH, Regina, 97640 Hendungen (DE)
(74) Vertreter: Siemens Patent Attorneys
(86) Internationale Anmeldenummer: PCT/EP2020/059519
(87) Internationale Veröffentlichungsnummer: WO 2020/233884

(56) Entgegenhaltungen:
- EP-A1- 2 744 076
- WO-A1-2016/188764
- PALMIERI MARCO ET AL: "Effect of the numbers of slots and barriers on the optimal design of synchronous reluctance machines", 2014 INTERNATIONAL CONFERENCE ON OPTIMIZATION OF ELECTRICAL AND ELECTRONIC EQUIPMENT (OPTIM), IEEE, 22. Mai 2014 (2014-05-22), Seiten 260-267, XP032615779, DOI: 10.1109/OPTIM.2014.6850947

## Beschreibung

Die Erfindung betrifft einen vierpoligen Synchron-Reluktanz-motor.

Bei Synchron-Reluktanzmotoren werden Reluktanzrotorbleche mit entsprechenden Aussparungen eingesetzt. Durch die Ausstanzungen ergeben sich streifenförmige Blechabschnitte, die als Flussleitabschnitte dienen und den magnetischen Fluss in der für die Bereitstellung der nötigen Reluktanz des Rotors nötigen Weise führen. Radial zwischen den einzelnen Flussleitabschnitten befinden sich amagnetische Bereiche, die durch Ausstanzungen geschaffen werden und mit Luft oder magnetisch schlecht leitfähigem Material versehen sind, d.h. als magnetische Flusssperren wirken. Durch die streifenförmigen Flussleitabschnitte ergibt sich eine hohe Drehmomentausbeute. Die magnetische Permeabilität des Blechpakets ist in Richtung der q-Achse, d.h. der magnetischen Sperrrichtung aufgrund der unmagnetischen Bereiche verhältnismäßig klein. Die streifenförmigen Flussleitabschnitte verlaufen quer zu der q-Achse und verbinden in Umfangsrichtung benachbarte Pole des Rotors, die jeweils auf d-Achsen (magnetische Vorzugsrichtungen) angeordnet sind.

So ist die d-Achse mit einem Flussleitabschnitt vom Innenzum Außendurchmesser durchgehend aus Blech gebildet, während die q-Achse durch Flusssperren unterbrochen ist.

Ein derartiger Synchron-Reluktanz-Motor ist aus der Schrift US 5 818 140 A1 bekannt, wobei dort bereits Möglichkeiten zur Reduktion der Drehmomentenwelligkeit vorgestellt sind. WO2016188764 und XP032615779 "Effect of the numbers of slots and barriers on the optimal design of synchronous reluctance machines" (DOI: 10.1109/OPTIM.2014.6850947) beschreiben ähnliche 4-polige Reluktanzmaschinen. Die dort vorgestellten Maßnahmen reduzieren zu einem gewissen Prozentsatz die Drehmomentenwelligkeit, als auch das Geräusch und Schwingungsverhalten im Vergleich zu einem Synchron-Reluktanzmotor mit einer identischen oder nahezu identischen Anzahl von Nutteilungen von Stator und Rotor, also Ns = Nr. Ausgehend davon liegt der Erfindung die Aufgabe zugrunde, einen vierpoligen Synchron-Reluktanzmotor dahin zu verbessern, dass die Drehmomentenwelligkeit weiter reduziert wird, ohne das Nutzdrehmoment zu verringern.

Die Lösung der gestellten Aufgabe gelingt durch einen Synchron-Reluktanzmotor, wie in Ansprüche 1 und 2 beschrieben.

Erfindungsgemäß wird nunmehr in Abhängigkeit von der gewählten Anzahl von Rotornuten bzw. vom Nutteilungswinkel αr vorteilhafterweise die Anzahl der Flussbarrieren maximiert. Dadurch wird die Drehmoment-Dichte und auch das mittlere Drehmoment der Maschine erhöht. Die Anzahl der Flussbarrieren wird durch den gewählten Nutteilungswinkel bzw. die Anzahl der Rotornuten, als auch durch die filigranen Strukturen und damit letztlich auch durch die Achshöhe nach oben begrenzt.

Eine Flussbarriere ist demnach ein Steg, der sich am Ende einer Flusssperre im Bereich des Luftspaltes der dynamoelektrischen Maschine ergibt.

Durch die erfindungsgemäße Ausgestaltung des Reluktanzrotors im Hinblick auf den Stator werden nunmehr Pendelmomente mit Ordnungszahlen der Statornutung, sowie deren Vielfache maßgeblich reduziert. Des Weiteren wird dabei die Drehmomentenwelligkeit minimiert. Damit wird das mittlere Drehmoment erhöht und die Leistung des Reluktanzmotors gesteigert. Insbesondere ist es nunmehr nicht mehr erforderlich, den Reluktanzmotor, stator- und/oder rotorseitig um einen vorgegebenen Schrägungswinkel zu schrägen, was aber dennoch optional zusätzlich ausgeführt sein kann, um die Drehmomentenwelligkeit weiter zu reduzieren.

Um auch bei vergleichsweise hohen Drehzahlen eine ausreichende Festigkeit des Reluktanzrotors, hinsichtlich Zentrifugalkräften zu erhalten, bilden Stege am radial äußeren Rand des Rotors der Flusssperren einen umfänglich zusammenhängenden Verbindungsring.

Dieser Verbindungsring kann aus einem anderen Material oder auch lediglich Teil des Blechs sein - also einstückig, und somit lediglich durch den Ausstanzungsvorgang am Blech gebildet sein.

Die einzelnen Flussbarrieren können somit je nach umfänglicher Lage eine radial größere oder kleinere Dicke aufweisen.

"Z. Erfindungsgemäß sind die Flussbarrieren im Bereich der d-Achse radial dünner ausgeführt sein als im Bereich der q-Achse.

Die Erfindung sowie weitere vorteilhafte Ausgestaltungen der Erfindung werden anhand beispielhaft dargestellter Ausführungsbeispiele näher erläutert. Darin zeigen:
- FIG 1: einen Reluktanzmotor mit einer Nutteilung,
- FIG 2, FIG 3: Reluktanzmotoren mit jeweils einer anderen Nutteilung,
- FIG 4: eine Detaildarstellung eines Reluktanzrotors.

Ein Reluktanzmotor 1 weist einen Stator 2 mit Statornuten 3 auf, in denen ein Wicklungssystem 8 positioniert ist. Das Wicklungssystem 8 kann sowohl als Einschicht- als auch als Zweischichtwicklung ausgeführt sein. Vor allem bei Zweischichtwicklungen werden die Wicklungen gesehnt ausgeführt. das vorzugsweise aus gesehnten Spulen aufgebaut ist. Vorteilhafterweise ist in den Statornuten 3 ein dreisträngiges Wicklungssystem untergebracht. Durch einen Luftspalt 10 von der Innenbohrung des Stators 2 beabstandet ist ein Reluktanzrotor 5 angeordnet, der vierpolig ausgeführt ist.

Beispielsweise durch Ausstanzungen von vorgegebenen Blechen ergeben sich streifenförmige Blechabschnitte, die als Flussleitabschnitte 7 dienen und den magnetischen Fluss in der für die Bereitstellung der nötigen Reluktanz des Reluktanzrotors 5 führen. Radial zwischen den einzelnen Flussleitabschnitten 7 befinden sich amagnetische Bereiche, die durch Ausstanzungen geschaffen werden und mit Luft oder magnetisch schlecht leitfähigem Material versehen sind, d.h. als magnetische Flusssperren 6 wirken. Durch die streifenförmigen und bogenförmigen Flussleitabschnitte 7 ergibt sich eine hohe Drehmomentausbeute. Die magnetische Permeabilität des aus den axial gestapelten Blechen gebildeten Blechpakets ist in Richtung der q-Achse, d.h. der magnetischen Sperrrichtung aufgrund der unmagnetischen Bereiche verhältnismäßig klein.

Die streifenförmigen Flussleitabschnitte 7 verlaufen quer, insbesondere senkrecht zu der q-Achse und verbinden in Umfangsrichtung benachbarte Pole des Reluktanzrotors 5, wobei die Pole jeweils auf d-Achsen (magnetische Vorzugsrichtungen) angeordnet sind.

Die Aussparungen, welche als Flusssperre 6 dienen, verlaufen im Wesentlichen bogenförmig von einem Pol zum benachbarten Pol. Darüber hinaus sind sie im Wesentlichen streifenförmig.

Aus Stabilitätsgründen können die Flusssperren 6 von radial verlaufenden bzw. ausgerichteten Stabilisierungsstegen 15 unterbrochen sein. Deren physische Position innerhalb einer Flusssperre 6 ist aus magnetischer Sicht unwichtig. Die dargestellte Breite der Stabilisierungsstege 15 ist aus zeichnerischen Gründen größer als die tatsächliche Größe.

Radial betrachtet ergeben sich zwischen den bogenförmigen, streifenförmigen Aussparungen, also den Flusssperren 6 somit weiterhin ebenfalls streifenförmige, bogenförmige Flussleitabschnitte 7.

Die bogenförmigen, nicht magnetischen Aussparungen zwischen benachbarten Polen verlaufen quer, insbesondere senkrecht zu den q-Achsen, die winkelhalbierend zwischen den d-Achsen liegen. Auf den q-Achsen erfolgt also Flusssperrung.

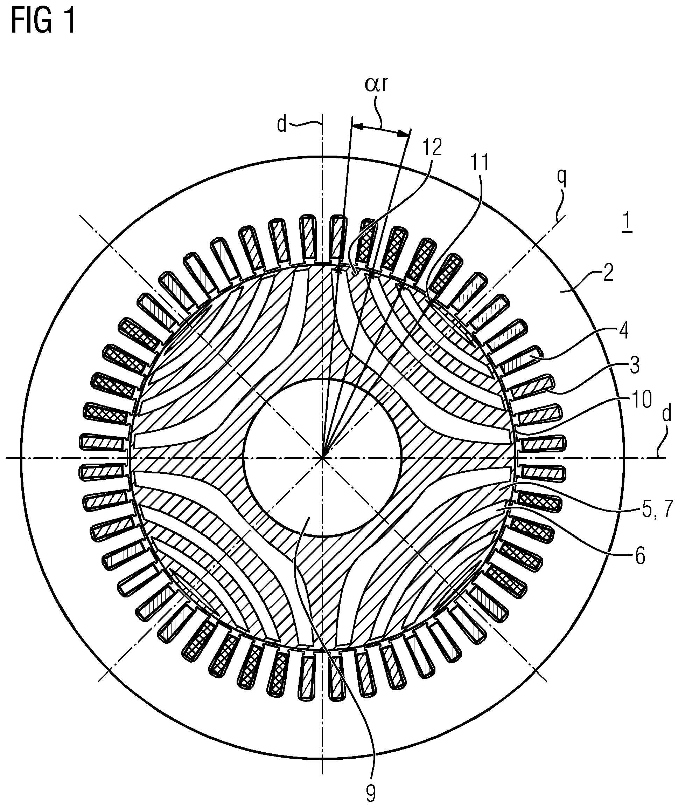

FIG 1 bis 3 dargestellten Querschnitte eines Reluktanzmotors 1 mit möglichen Reluktanzrotorblechen sind für einen vierpoligen Reluktanzrotor 5. Dementsprechend weist das Reluktanzrotorblech zwei senkrecht zueinander stehende d-Achsen auf, die magnetische Vorzugsrichtungen darstellen und die durch das Zentrum des Reluktanzrotorblechs getrennt jeweils d-Achsenhälften besitzen.

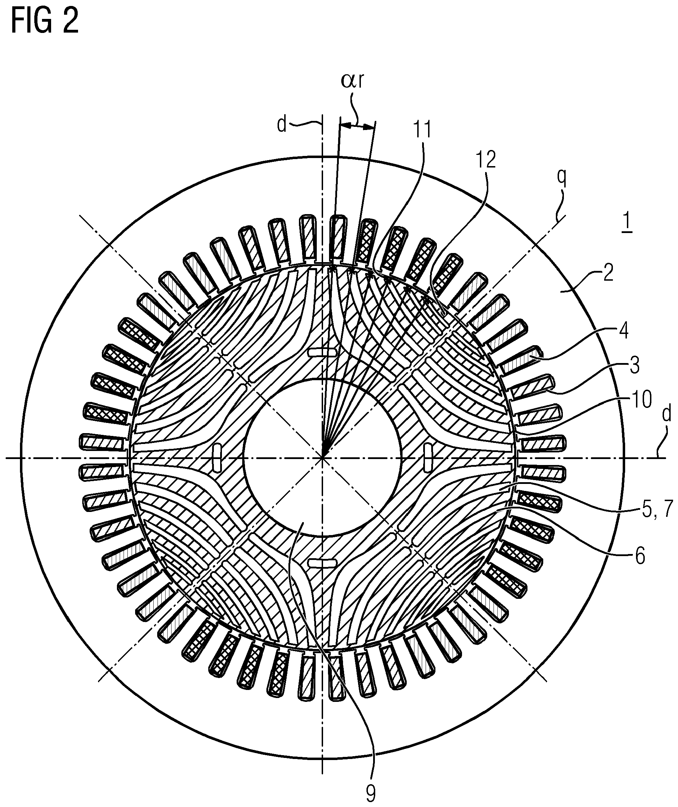

Die d- und die q-Achsen des Reluktanzrotors 5 werden somit durch Flusssperren 6 und magnetisch leitfähige Flussleitabschnitte 7 gebildet. Im Bereich des Luftspalts 10 der dynamoelektrischen Maschine bzw. des Reluktanzmotors 1 sind die Flusssperren 6 durch Stege bzw. Flussbarrieren 11, 12 vom Luftspalt 10 beabstandet und bilden einen umfänglich zusammenhängenden Verbindungsring. Dies ist aus mechanischen Festigkeitsgründen, insbesondere bei hohen Drehzahlen des Reluktanzmotor 1 notwendig. Zwischen diesen Flussbarrieren 11, 12 also den realen Flussbarrieren 11 und den virtuellen Flussbarrieren 12 (gemäß FIG 2) sind vorgegebene Nutteilungswinkel αr des Reluktanzrotors 5.

FIG 1 zeigt einen Nutteilungswinkel αr von ca. 10° geometrisch, mit umfänglich 32 angeordneten Flussbarrieren 11.

Die Nutzahl des Stators 2 ist 48 und die Nutzahl des Reluktanzrotors 5 ist 36.

Wobei u.a. herstellungsbedingt oder konstruktionsbedingt der Nutteilungswinkel αr mit einer Toleranz von bis zu ± 0,3° versehen sein kann.

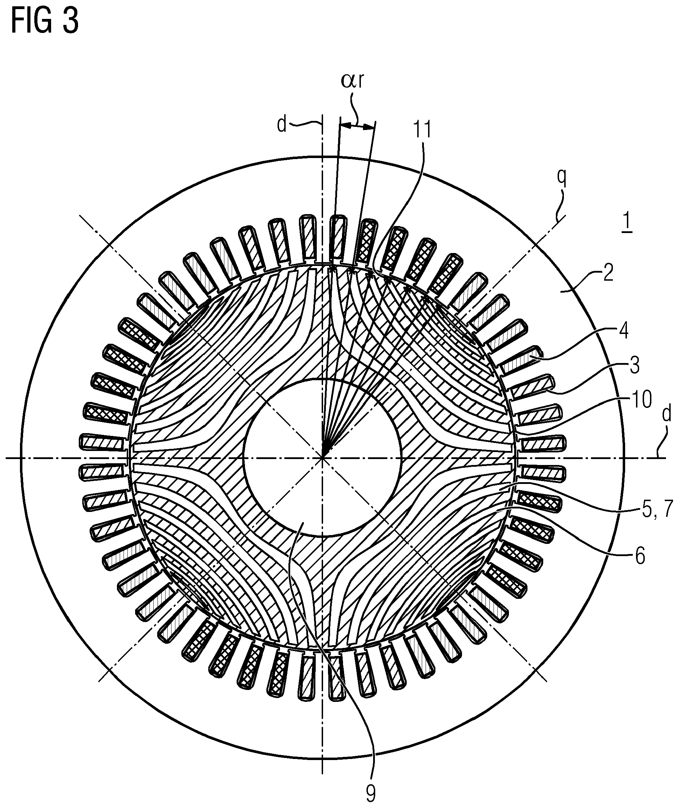

FIG 2 und 3 zeigen Nutteilungswinkel αr von jeweils ca. 6° geometrisch, mit umfänglich 56 angeordneten Flussbarrieren 11. In FIG 2 sind dabei 48 reale und acht virtuelle ausgebildete Flussbarrieren vorhanden. In Fig 3 sind 56 real ausgebildet Flussbarrieren 11 vorhanden. Die Nutzahl des Stators 2 ist 48 und die Nutzahl des Reluktanzrotors 5 ist bei diesen Ausführungen 60.

Wobei u.a. fertigungs- oder konstruktionsbedingt der Nutteilungswinkel αr dort mit einer Toleranz von bis zu ± 0,5° versehen sein kann.

Eine Welle und damit der mit ihr drehfest verbundene Reluktanzrotor 5 ist dann um eine Rotationsachse drehbar gelagert, so dass der Reluktanzrotor 5 in einem Stator 2 des Reluktanzmotors 1 eine Rotation um die Rotationsachse vollführen kann.

Der Reluktanzrotor 5 weist als magnetisch aktives Teil das Blechpaket auf, das aus mehreren Schichten bzw. Blechen gebildet ist, die jeweils weichmagnetisches, insbesondere ferromagnetisches, Material aufweisen. Diese Schichten weisen ferner elektrisch isolierende Teilschichten auf, um Wirbelströme in dem Blechpaket im Betrieb des Reluktanzmotors 1 zu unterbinden.

Die Rotorbleche sind axial fluchtend in dem Blechpaket hintereinander angeordnet, so dass die Aussparungen und entsprechend auch die Flussleitabschnitte 7 axial fluchten. Vorzugsweise ist somit keine Schrägung von Stator 2 und/oder Reluktanzrotor 5 notwendig, um ein maximales Drehmoment bereitzustellen, das eine vergleichsweise geringe Drehmomentenwelligkeit aufweist.

Um die Drehmomentenwelligkeit des Reluktanzmotors jedoch weiter zu reduzieren, können die Rotorbleche axial betrachtet weiterhin geschrägt oder gestaffelt angeordnet werden.

Die Rotorbleche der Schichten können alle die gleiche Querschnittsform aufweisen, was beispielsweise einen Stanzprozess bei der Herstellung des Rotorblechpaketes des Reluktanzrotors 5 vereinfacht.

Damit der Reluktanzrotor 5 am Außenumfang geschlossen ist, besitzt jedes Rotorblech an seinem Außenrand einen geschlossenen Verbindungsring. Er fixiert damit auch die Flussleitabschnitte 7 und die Flusssperren 6. Der Verbindungring weist in Umfangsrichtung betrachtet eine Abfolge von Stegen bzw. Flussbarrieren auf.

Diese Stege sind einstückig mit dem jeweiligen Rotorblech im Rahmen eines Stanzprozesses formbar. Der Verbindungsring kann aber alternativ oder ergänzend auch als eigenes Bauteil vorgesehen werden, das ggf. nachträglich am Rotorblechpaket angebracht wird.

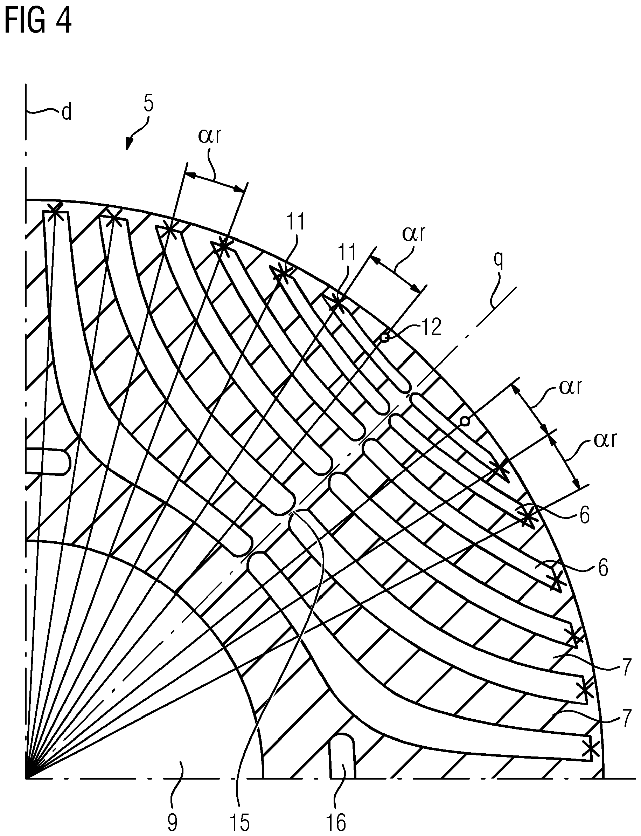

FIG 4 zeigt in einer prinzipiellen, nicht maßstäblichen Darstellung die realen und virtuellen Flussbarrieren 11, 12, die durch einen Nutteilungswinkel αr von jeweils ca. 6° in Umfangsrichtung voneinander beabstandet sind. Diese virtuellen Flussbarrieren 12 sind nicht physisch oder real vorhanden, werden aber bei der Bewertung der Nutteilung berücksichtigt. Im vorliegenden Fall sind die Flussbarrieren 12 virtuell, da die radial äußerste Flusssperre theoretisch in zwei radial sehr dünne Flusssperren unterteilt sein sollte. Die Fertigung derartiger filigraner Strukturen mittels Stanzwerkzeugen ist abhängig von der Achshöhe des Reluktanzrotors 5 nicht oder nur sehr schwierig machbar.

Die realen Flussbarrieren 11 bilden einen Abschluss einer Flusssperre 6 zum Luftspalt 10. Diese Gestaltung der Flussbarriere 11 kann mit nahezu geradlinig parallelen Kanten oder mit bogenförmigen Kanten gebildet sein. Dies hängt u.a. von den Fertigungsmöglichkeiten und/oder den Festigkeitsanforderungen an das Rotorblech ab.

Die erfindungsgemäße Gestaltung des Reluktanzrotors 5 kann auf synchrone Reluktanzmotoren 1 ohne Permanentmagnete, als auch auf synchrone Reluktanzmotoren 1, deren Rotoren Permanentmagnete aufweisen, angewendet werden. Dabei werden Permanentmagnete in vorgegebener Anzahl und/oder Position in die Flusssperren 6 eingesetzt.

Derartige Reluktanzmotoren 1 werden vor allem bei Werkzeugmaschinen als Haupt- oder Servoantriebe verwendet. Ebenso sind Anwendungen bei Kompressoren, Pumpen oder Lüfter vorstellbar. Weitere industrielle Einsatzgebiete sind beispielsweise Extruder oder Folienblasmaschinen. Diese Reluktanzmotoren 1 sind auch in der Nahrungsmittelindustrie einsetzbar.

Auch bei Antrieben in der Fahrzeugtechnik, z.B. bei Miningtrucks, Elektrobussen, Baumaschinen und auch bei Fahrzeugen unter Tage sind derartige Reluktanzmotoren 1 im Einsatz.

## Patentansprüche

1. Vierpoliger Synchron-Reluktanzmotor (1) mit
- einem Stator (2) mit 48 Statornuten (3) zur Aufnahme eines Wicklungssystems (8),
- einem Reluktanzrotor (5), der durch einen Luftspalt (10) vom Stator (2) beabstandet ist, wobei der Reluktanzrotor (5) als magnetisch aktives Teil ein Blechpaket aufweist, das aus mehreren Schichten bzw. Blechen gebildet ist, die jeweils weichmagnetisches, insbesondere ferromagnetisches Material aufweisen, wobei diese Schichten elektrisch isolierende Teilschichten aufweisen, und axial fluchtend sind, wobei der Reluktanzrotor (5) Achsen mit einer hohen magnetischen Leitfähigkeit (d-Achse) und Achsen mit geringer magnetischer Leitfähigkeit (q-Achse) aufweist,
- einer Anordnung von magnetisch leitfähigen Flussleitabschnitten (7) und magnetischen Flusssperren (6), die durch eine dementsprechende Anordnung d- und q-Achsen des Reluktanzrotors (5) bilden,
- wobei in Abhängigkeit von der gewählten Anzahl von Rotornuten bzw. vom Nutteilungswinkel αr eine Anzahl Flussbarrieren maximiert wird, wobei die Flussbarriere ein Steg ist, der sich am Ende einer Flusssperre im Bereich des Luftspaltes der dynamoelektrischen Maschine befindet,
- wobei die Flusssperren (6) im Bereich der q-Achse entweder radial verlaufende Stabilisierungsstege (15) oder ohne Stabilisierungsstäbe (15) ausgeführt sind,
- wobei der Reluktanzrotor (5) keine Permanentmagnete aufweist, **dadurch gekennzeichnet dass**
- einem geometrischen Nutteilungswinkel des Reluktanzrotors (5) von αr = 6°, der zwischen zwei benachbarten magnetischen Flusssperren (6) am Luftspalt (10) ist, und
- die Flussbarrieren im Bereich der d-Achse radial dünner ausgeführt sind als im Bereich der q-Achse.

2. Vierpoliger Synchron-Reluktanzmotor (1) mit
- einem Stator (2) mit 48 Statornuten (3) zur Aufnahme eines Wicklungssystems (8),
- einem Reluktanzrotor (5), der durch einen Luftspalt (10) vom Stator (2) beabstandet ist, wobei der Reluktanzrotor (5) als magnetisch aktives Teil ein Blechpaket aufweist, das aus mehreren Schichten bzw. Blechen gebildet ist, die jeweils weichmagnetisches, insbesondere ferromagnetisches Material aufweisen, wobei diese Schichten elektrisch isolierende Teilschichten aufweisen, und axial fluchtend sind, wobei der Reluktanzrotor (5) Achsen mit einer hohen magnetischen Leitfähigkeit (d-Achse) und Achsen mit geringer magnetischer Leitfähigkeit (q-Achse) aufweist,
- einer Anordnung von magnetisch leitfähigen Flussleitabschnitten (7) und magnetischen Flusssperren (6), die durch eine dementsprechende Anordnung d- und q-Achsen des Reluktanzrotors (5) bilden,
- wobei in Abhängigkeit von der gewählten Anzahl von Rotornuten bzw. vom Nutteilungswinkel αr eine Anzahl Flussbarrieren maximiert wird, wobei die Flussbarriere ein Steg ist, der sich am Ende einer Flusssperre im Bereich des Luftspaltes der dynamoelektrischen Maschine befindet,
- wobei die Flusssperren (6) im Bereich der q-Achse entweder radial verlaufende Stabilisierungsstege (15) oder ohne Stabilisierungsstäbe (15) ausgeführt sind,
- wobei der Reluktanzrotor (5) keine Permanentmagnete aufweist, **dadurch gekennzeichnet dass** - einem geometrischen Nutteilungswinkel des Reluktanzrotors (5) von αr = 10°, der zwischen zwei benachbarten magnetischen Flusssperren (6) am Luftspalt (10) ist, unddie Flussbarrieren im Bereich der d-Achse radial dünner ausgeführt sind als im Bereich der q-Achse.

3. Vierpoliger Synchron-Reluktanzmotor (1) nach Anspruch 1,
**dadurch gekennzeichnet , dass** sowohl Stator (2) als auch der Reluktanzrotor (5) ungeschrägt ausgeführt sind.

## Claims

1. Four-pole synchronous reluctance motor (1) having
- a stator (2) having 48 stator slots (3) for receiving a winding system (8),
- a reluctance rotor (5) that is spaced from the stator (2) by an air gap (10), wherein the reluctance rotor (5) has a laminated stack as a magnetically active part and said laminated stack is formed from multiple layers or laminations that in each case have a magnetically soft, in particular ferromagnetic, material, wherein these layers have electrically insulating part layers, and are arranged axially aligned, wherein the reluctance rotor (5) has axes having a high magnetic conductivity (d-axis) and axes having a low magnetic conductivity (q-axis), wherein the reluctance rotor (5) has axes having a high magnetic conductivity (d-axis) and axes having a low magnetic conductivity (q-axis),
- an arrangement of magnetically conductive flux guiding sections (7) and magnetic flux blockers (6) that form d- and q-axes of the reluctance rotor (5) by a corresponding arrangement,
- wherein a number of flux barriers is maximised in dependence upon the selected number of rotor slots or the slot division angle αr, wherein the flux barrier is a connecting piece that is located on the end of a flux blocker in the region of the air gap of the dynamoelectric machine,
- wherein the flux blockers (6) are embodied in the region of the q-axis either radially extending stabilising connecting pieces (15) or without stabilising connecting rods (15),
- wherein the reluctance rotor (5) does not have any permanent magnets, **characterised in that**
- a geometric slot dividing angle of the reluctance rotor (5) of αr = 6° that is between two adjacent magnetic flux blockers (6) on the air gap (10), and
- the flux barriers in the region of the d-axis are embodied as radially thinner than in the region of the q axis.

2. Four-pole synchronous reluctance motor (1) having
- a stator (2) having 48 stator slots (3) for receiving a winding system (8),
- a reluctance rotor (5) that is spaced from the stator (2) by an air gap (10), wherein the reluctance rotor (5) has a laminated stack as a magnetically active part and said laminated stack is formed from multiple layers or laminations that in each case have a magnetically soft, in particular ferromagnetic, material, wherein these layers have electrically insulating part layers, and are arranged axially aligned, wherein the reluctance rotor (5) has axes having a high magnetic conductivity (d-axis) and axes having a low magnetic conductivity (q-axis),
- an arrangement of magnetically conductive flux guiding sections (7) and magnetic flux blockers (6) that form d- and q-axes of the reluctance rotor (5) by a corresponding arrangement,
- wherein a number of flux barriers is maximised in dependence upon the selected number of rotor slots or the slot division angle αr, wherein the flux barrier is a connecting piece that is located on the end of a flux blocker in the region of the air gap of the dynamoelectric machine,
- wherein the flux blockers (6) are embodied in the region of the q axis either radially extending stabilising connecting pieces (15) or without stabilising connecting rods (15),
- wherein the reluctance rotor (5) does not have any permanent magnets, **characterised in that** a geometric slot dividing angle of the reluctance rotor (5) of αr = 10° that is between two adjacent magnetic flux blockers (6) on the air gap (10), and the flux barriers in the region of the d-axis are embodied as radially thinner than in the region of the q axis.

3. Four-pole synchronous reluctance motor (1) according to claim 1, **characterised in that** both the stator (2) as well as the reluctance rotor (5) are not embodied in an inclined manner.

## Revendications

1. Moteur (1) à reluctance synchrone quadripolaire comprenant
- un stator (2) ayant 48 encoches (3) statoriques de réception d'un système (8) d'enroulement,
- un rotor (5) à reluctance, qui est à distance du stator (2) par un entrefer (10), dans lequel le moteur (5) à reluctance a, comme partie active magnétiquement, un paquet de tôles formé de plusieurs couches ou tôles, qui ont chacune du matériau à magnétisme doux, notamment ferromagnétique, dans lequel ces couches ont des couches partielles isolantes du point de vue électrique et sont alignées axialement, dans lequel le rotor (5) à reluctance a des axes ayant une grande conductivité magnétique (axe d) et des axes ayant une petite conductivité magnétique (axe q),
- un agencement de parties (7) de conduite du flux conductrices magnétiquement et des arrêts (6) du flux magnétique, qui forment par un agencement correspondant des axes d et q du rotor (5) à reluctance,
- dans lequel, en fonction du nombre sélectionné d'encoches rotoriques ou de l'angle du pas des encoches, on maximise un nombre de barrières au flux, dans lequel la barrière au flux est une entretoise, qui se trouve à l'extrémité d'un arrêt du flux dans la partie de l'entrefer de la machine dynamoélectrique,
- dans lequel les arrêts (6) du flux sont réalisés dans la partie des axes q, soit sous la forme d'entretoises (15) de stabilisation s'étendant radialement, soit sans barreau (15) de stabilisation,
- dans lequel le rotor (5) à reluctance n'a pas d'aimant permanent,
**caractérisé par**
- un angle géométrique de pas d'encoche du rotor (5) à reluctance de αΓ = 6°, qui est à l'entrefer (10) entre deux arrêts (6) de flux magnétique voisins, et
- en ce que les barrières au flux sont réalisées plus minces radialement dans la partie de l'axe d que dans la partie de l'axe q.

2. Moteur (1) à reluctance synchrone quadripolaire, comprenant
- un stator (2) ayant 48 encoches (3) statoriques de réception d'un système (8) d'enroulement,
- un rotor (5) à reluctance, qui est à distance du stator (2) par un entrefer (10), dans lequel le moteur (5) à reluctance a, comme partie active magnétiquement, un paquet de tôles formé de plusieurs couches ou tôles, qui ont chacune du matériau à magnétisme doux, notamment ferromagnétique, dans lequel ces couches ont des couches partielles isolantes du point de vue électrique et sont alignées axialement, dans lequel le rotor (5) à reluctance a des axes ayant une grande conductivité magnétique (axe d) et des axes ayant une petite conductivité magnétique (axe q),
- un agencement de parties (7) de conduite du flux conductrices magnétiquement et des arrêts (6) du flux magnétique, qui forment par un agencement correspondant des axes d et q du rotor (5) à reluctance,
- dans lequel, en fonction du nombre sélectionné d'encoches rotoriques ou de l'angle du pas des encoches, on maximise un nombre de barrières au flux, dans lequel la barrière au flux est une entretoise, qui se trouve à l'extrémité d'un arrêt du flux dans la partie de l'entrefer de la machine dynamoélectrique,
- dans lequel les arrêts (6) du flux sont réalisés dans la partie des axes q, soit sous la forme d'entretoises (15) de stabilisation s'étendant radialement, soit sans barreau (15) de stabilisation,
- dans lequel le rotor (5) à reluctance n'a pas d'aimant permanent,
**caractérisé par**
- un angle géométrique de pas d'encoche du rotor (5) à reluctance de αΓ = 10°, qui est à l'entrefer (10) entre deux arrêts (6) de flux magnétique voisins, et
- en ce que les barrières au flux sont réalisées plus minces radialement dans la partie de l'axe d que dans la partie de l'axe q.

3. Moteur (1) à reluctance synchrone quadripolaire suivant la revendication 1, **caractérisé en ce que** tant le stator (2) qu'également le rotor (5) à reluctance sont réalisés sans inclinaison.
